# EUROPEAN PATENT APPLICATION

(11) **EP 1 130 857 A2**
(43) Date of publication of application: **05.09.2001**
(21) Application number: 01104915.2
(22) Date of filing: 28.02.2001
(51) Int. Cl.: H04L 12/56

(54) **Packet transportation system in mobile communications**

(30) Priority: 01.03.2000 JP 2000056208
(71) Applicant: MITSUBISHI DENKI KABUSHIKI KAISHA, Tokyo 100-8310 (JP)
(72) Inventor: Okubo, Akira, Chiyoda-ku, Tokyo 100-8310 (JP); Matsuyama, Hiroshi, Chiyoda-ku, Tokyo 100-8310 (JP)
(74) Representative: Popp, Eugen, Dr.

(57) **Abstract**

A system (27a, 27b, 27c) for transporting packet in mobile communications, including a packet transportation aid (26a, 26b, 26c) linked with another communication system (27a, 27b, 27c) for facilitating to transport a packet to its destination system. The packet transportation aid retrieves area information on a destination terminal (21a, 21b1, 21b2) from an outside register (34) when the packet transportation aid has received a packet from a source terminal (21a, 21b1, 21b2) existing in the corresponding system. The packet transportation aid recognizes a destination system (27a, 27b, 27c) that can serve the destination terminal on the basis of the area information, and routes the packet directly to the destination system.

## Description

### BACKGROUND OF THE INVENTION

### FIELD OF THE INVENTION

The present invention relates to a packet transportation system for mobile communications, in which a packet transportation aid of an area where a source terminal exists can supervise information on another area where a destination terminal visits, so that the packet transportation aid for the source terminal routes packets directly to another packet transportation aid for the destination terminal.

### PRIOR ART

On account of a recent great increase in the demand for Internet communications, various packet transportation systems using IPs (internet protocols) have been developed in the field of mobile communication technology. Particularly, IMT-2000 (International Mobile Telecommunications 2000) is planning to provide the third generation mobile communications with epochal higher ratio and wider bandwidth, so that utilization of packet communications with IPs will be enhanced in mobile communications.

Conventional packet transportation systems are disclosed in, e.g., WO96/ 21328 and JP-A-8-186605. Specifically, WO96/21328 discloses a method for packet transportation and a mobile communications system. JP-A-8-186605 discloses a method for packet transportation in mobile communications.

Fig. 7 is a diagram showing a conventional packet communications network disclosed in WO96/21328. In Fig. 1, numeral 1 designates a mobile terminal. 2 designates a database including a signal processing circuit 5a and a subscriber information memory 6. 3 designates a special packet exchange including a signal processing circuit 5b and a subscriber information cache memory 7. 4 designates one of a plurality of ordinal packet exchanges, each including a signal processing circuit 5c and a visiting subscriber information memory 8. Only the packet exchange 3 can manage information on each location of a mobile terminal that has traveled from one zone to another. Let us assume that the mobile terminal 1 visits a zone served by the packet exchange 4.

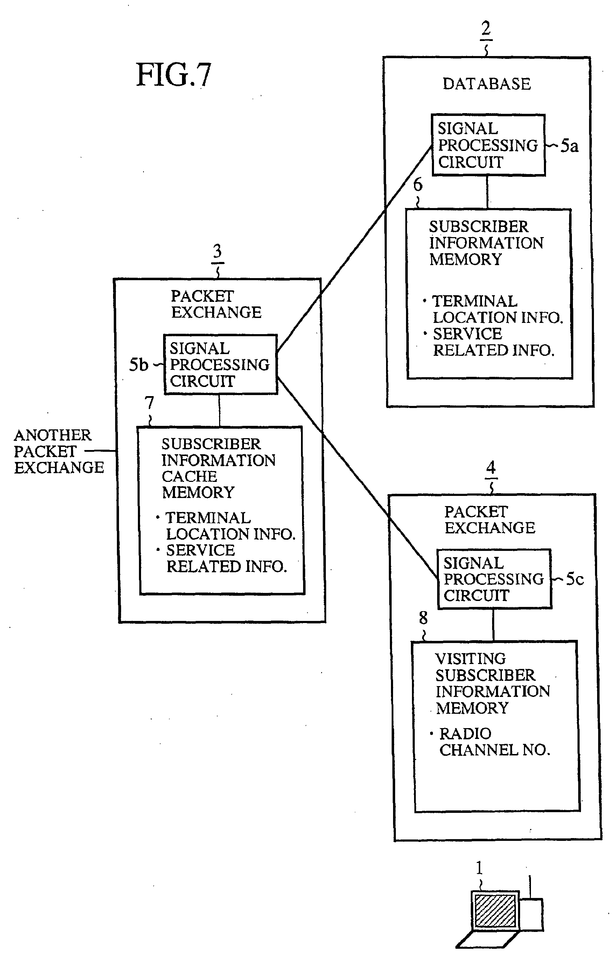

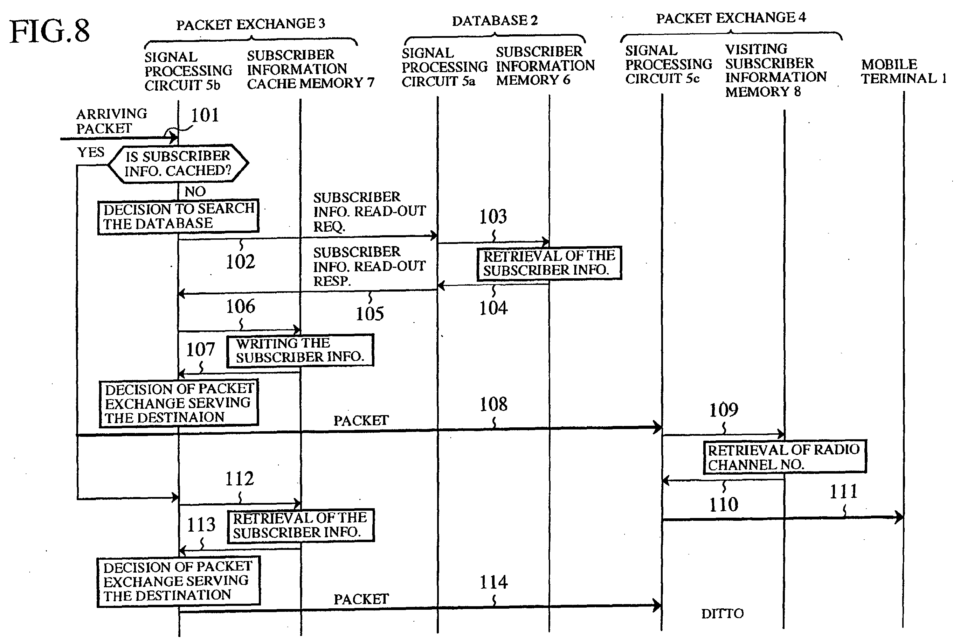

Fig. 8 is an information flow sequence diagram representing an operation of the conventional packet communications network shown in Fig. 7. With reference to Fig. 8, the operation will be described.

The signal processing circuit 5b of the packet exchange 3, upon receiving a packet from another packet exchange as depicted by flow 101, refers to the destination (subscriber) information specified by the received packet and determines whether or not the subscriber information is currently cached or stored in the subscriber information cache memory 7. If the subscriber information is not currently cached, the signal processing circuit 5b issues a subscriber information read-out request to the database 2 as depicted by flow 102. In response, the signal processing circuit 5a of the database 2 retrieves the requested subscriber information from the subscriber information memory 6 as depicted by flows 103 and 104, and issues a subscriber information read-out response to the packet exchange 3 as depicted by flows 105. The signal processing circuit 5b of the packet exchange 3 then stores the retrieved subscriber information in the subscriber information cache memory 7 as depicted by flows 106 and 107.

On the other hand, if the subscriber information is currently cached in the subscriber information cache memory 7, the signal processing circuit 5b acquires the subscriber information from the subscriber information cache memory 7 as depicted by flows 112 and 113.

The signal processing circuit 5b of the packet exchange 3 then determines, upon the basis of the subscriber information, the packet exchange to which the received packet should be transferred, and carries out transference. According to the determination, the received packet is transferred to the packet exchange 4 serving a zone where the mobile terminal 1 exists, as depicted by flow 108 or 114.

The signal processing circuit 5c of the packet exchange 4 then retrieves an available radio channel number for the mobile terminal 1 from the visiting subscriber information memory 8 as depicted by flows 109 and 110. Next, the received packet is transferred to the destination mobile terminal 1 from the packet exchange 4 via the retrieved radio channel as depicted by flow 111. According to the above-described sequence, packets destined for the mobile terminal 1 are successively transferred to the mobile terminal 1.

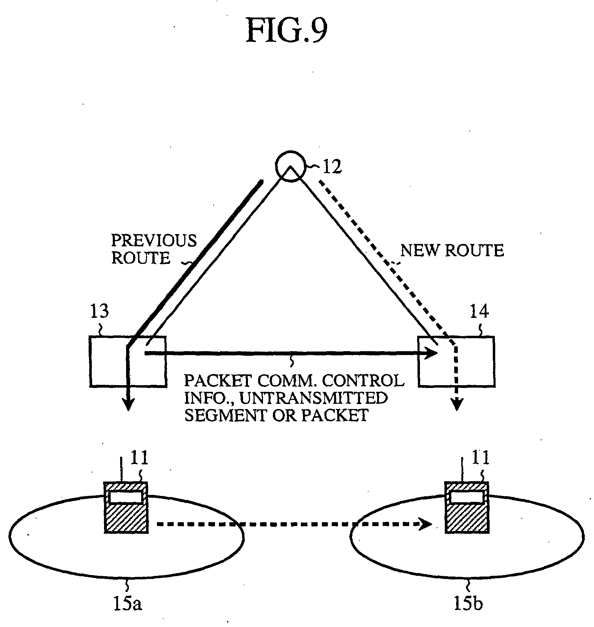

Fig. 9 is a diagram showing a conventional packet communications network disclosed in JP-A-8-186605. In Fig. 9, numeral 11 designates a communication terminal. 12 designates a home exchange. Each of 13 and 14 designates an exchange capable of communicating with the home exchange 12. Each of 15a and 15b designates an area in which a communication terminal can be served by an exchange through the air. As illustrated in Fig. 9, assume that the communication terminal 11 is now traveling from the area 15a to the area 15b while it is receiving a packet.

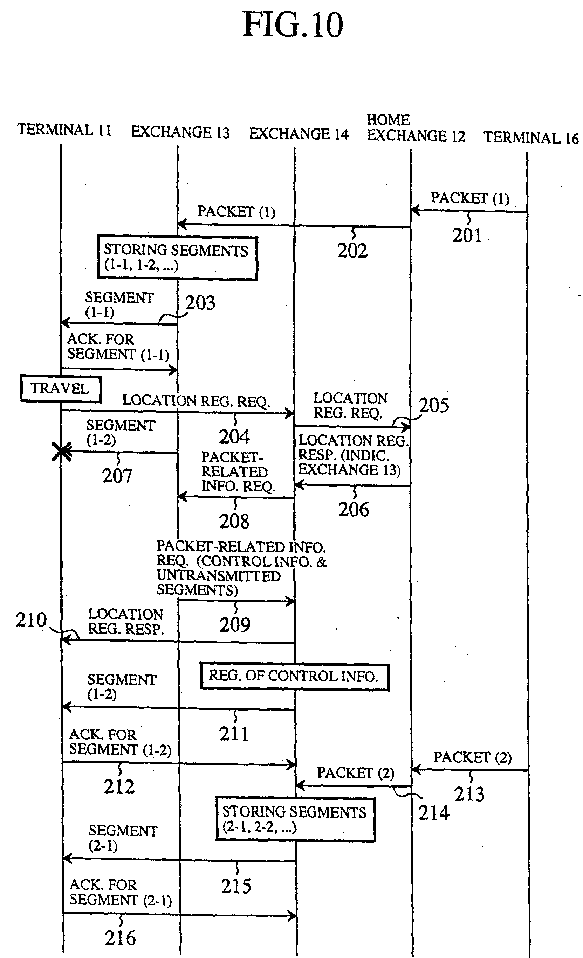

Fig. 10 is an information flow sequence diagram representing an operation of the conventional packet communications network shown in Fig. 9. With reference to Fig. 10, the operation will be described. In Fig. 10, numeral 16 designates a source communication terminal that uses the home exchange 12 to transmit packets destined for the communication terminal 11.

The source communication terminal 16 sends out a packet (1) destined for the communication terminal 11 as depicted by flow 201 and the home exchange 12 transfers the packet (1) to the exchange 13 serving for the area 15a from which the communication terminal 11 is leaving, as depicted by flow 202. Upon receiving the packet, the exchange 13 divides it into a plurality of segments (1-1, 1-2, and so on) and commences to transmit the segments (1-1, 1-2, and so on) successively to the communication terminal 11 through the air in such a fashion that the first segment generated is also the first segment transferred, as depicted by flow 203. The exchange 13 temporally stores each segment until it receives the acknowledgment for the corresponding segment.

Assume now that the communication terminal 11 has traveled from the area 15a served by the exchange 13 to the area 15b served by the exchange 14 while the communication terminal 11 has not yet received the second segment (1-2) and subsequent segments (reception of flow 207 is failed). Then, the newly serving exchange 14 transfers a location registration request depicted by flow 204 from the communication terminal 11 to the home exchange 12, as depicted by flow 205, so as to notify the home exchange 12 that the communication terminal 11 now exists in the area 15b served by the exchange 14. Upon receiving the location registration request, the home exchange 12 updates the location information on the communication terminal 11 in its registration storage, and then, notifies the exchange 14 that the exchange 13 has previously served the communication terminal 11, as depicted by flow 206.

Upon receiving the notification, the exchange 14 issues a packet-related information request to the previously serving exchange 13 as depicted by flow 208. In response, the exchange 13 transfers packet communication control information on the communication terminal 11 and untransmitted segments (the second segment (1-2) and subsequent segments) to the exchange 14 as depicted by flow 209. The exchange 14 then issues a location registration response to the communication terminal 11 as depicted by flow 210, and then, registers the packet communication control information in its registration storage. Furthermore, the exchange 14, upon the basis of the acquired packet communication control information, restarts transmitting the untransmitted segments successively to the communication terminal 11 by air, as depicted by flow 211. The communication terminal 11 sends a segment acknowledgment to the exchange 14 whenever it receives an untransmitted segment, as depicted by flow 212.

After updating the location information on the communication terminal 11 in the home exchange 12, once the home exchange 12 receives a next packet (2) destined for the communication terminal 11 from the communication terminal 16 as depicted by flow 213, the home exchange 12 transfers the packet (2) to the newly serving exchange 14 as depicted by flow 214. Upon receiving the packet (2), the exchange 14 segmentizes it into a plurality of segments (2-1, 2-2, and so on) and commences to transmit the segments (2-1, 2-2, and so on) successively to the communication terminal 11 by air in such a manner that the first segment generated is also the first segment transferred, as depicted by flow 215. The exchange 14 temporally stores each segment until it receives the acknowledgment for the segment depicted by flow 216.

The conventional packet communications networks and mobile packet communications systems set forth above have problems as in the following.

In accordance with the packet switching network illustrated in Fig. 7, in order to facilitate to seek the area where a subject mobile terminal exists on the basis of the location registration, the packet exchange 3 stores information about the area in the outside database 2 or the subscriber information cache memory 7 within the packet exchange 3. For transferring packets to a destination mobile terminal, the packet exchange 3 reads out the area information of the mobile terminal that the packet exchange 3 has stored in the database 2 or subscriber information cache memory 7, and, on the basis of the area information, fixes the route of the packets to the packet exchange 4 having an area where the mobile terminal visits. The end packet exchange 4 transfers the packets to the destination mobile terminal via the radio channel that the packet exchange 4 has retrieved. Therefore, it is necessary that the sole special packet exchange 3 routes packets if the destination has moved. This means that another exchange cannot route packets directly to a different exchange for itself.

In accordance with the packet switching network illustrated in Fig. 9, the exchange 13, from which the destination communication terminal 11 is leaving, sends the exchange 14, to which the terminal 11 currently exists, the packet communication control information on the communication terminal 11 and untransmitted segments in order to facilitate to restart transporting the packets. However, even after the travel of the destination, the new communication route is decided by the home exchange 12 while the previous communication route is decided by the home exchange 12. Thus, in this method, another exchange cannot route packets directly to a different exchange for itself.

### SUMMARY OF THE INVENTION

Accordingly, it is an object of the present invention to provide a packet transportation system which can optimize the route for communication between mobile terminals, thereby decreasing transfer delay and enhancing the efficiency of packet transportation.

In accordance with an aspect of the present invention, there is provided a system for transporting packet in mobile communications, comprising: a plurality of subnetworks, each subnetwork including: a visitor location register for storing visitor information on individual mobile terminals visiting the corresponding subnetwork, the visitor information indicating zones where individual mobile terminals visit; a plurality of base stations capable of communicating with mobile terminals; at least one base station controller for controlling radio links between mobile terminals and the base stations; and a packet transportation aid for facilitating to transport a packet to its destination, the packet transportation aid, on the basis of the visitor information in the corresponding visitor location register, capable of controlling the base station controller and a necessary base station for transporting a packet to a destination mobile terminal, the system further comprising: a gateway for interlinking the subnetworks; and a home location register for storing area information about subnetworks in which individual mobile terminals of subscribers of the system currently exist, the packet transportation aid of each of the subnetworks retrieving the area information on a destination terminal from the home location register when the packet transportation aid has received a packet from a source terminal existing in the corresponding subnetwork, recognizing a destination subnetwork that can serve the destination terminal on the basis of the area information, and routing the packet directly to a destination packet transportation aid of the destination subnetwork.

Preferably, the packet transportation aid of each of the subnetworks may encapsulate the packet to be routed to the destination packet transportation aid, and may attach destination packet transportation aid information identifying the destination packet transportation aid to the encapsulated packet.

In a preferred embodiment, the gateway is linked with an outside packet-switching network, and the packet transportation aid of each of the subnetworks may transfer a packet to the gateway when the packet is not destined for terminals of subscribers of the subnetworks. The gateway may further transfer the packet to the outside packet switching network. In this embodiment, the packet transportation aid of each of the subnetworks may encapsulate the packet to be routed to the destination packet transportation aid or the gateway, and may attach destination packet transportation aid information identifying the destination packet transportation aid or the gateway to the encapsulated packet.

Preferably, the packet transportation aid of each of the subnetworks may store the area information on the destination terminal in the corresponding visitor location register when the packet transportation aid retrieves the area information from the home location register. The packet transportation aid may retrieve the area information from the visitor location register when the packet transportation aid has received another packet destined for the same destination terminal. The packet transportation aid may recognize the destination subnetwork on the basis of the area information, and may route the packet directly to the destination packet transportation aid of the destination subnetwork.

In a preferred embodiment, when the destination terminal has traveled from the destination subnetwork to a second destination subnetwork during transportation of packets to the destination terminal, a second destination packet transportation aid corresponding to the second destination subnetwork may issue an area replacement request to the packet transportation aid of the subnetwork where the source terminal exists, the area replacement request indicating that the destination terminal exists in the second destination subnetwork. The packet transportation aid of the subnetwork where the source terminal exists may recognize the second destination subnetwork on the basis of the area replacement request, and may route an untransmitted packet directly to a second destination packet transportation aid of the second destination subnetwork.

In a preferred embodiment, the packets may be multicast packets. When one of a plurality of destination terminals of the multicast packets has traveled from a destination subnetwork to a second destination subnetwork during transportation of multicast packets to the destination terminals, a second destination packet transportation aid corresponding to the second subnetwork may issue an area replacement request to the packet transportation aid of the subnetwork where the source terminal exists, the area replacement request indicating that the destination terminal exists in the second destination subnetwork. The packet transportation aid of the subnetwork where the source terminal exists may recognize the second destination subnetwork on the basis of the area replacement request, and may route an untransmitted multicast packet directly to a second destination packet transportation aid of the second destination subnetwork.

Preferably, when the destination terminal has traveled from the destination subnetwork to a second destination subnetwork during transportation of packets to the destination terminal, a second destination packet transportation aid corresponding to the second destination subnetwork may obtain untransmitted packets from the destination packet transportation aid of the destination subnetwork from which the destination terminal has left.

In accordance with another aspect of the present invention, there is provided a system for transporting packet in mobile communications, comprising: a visitor location register for storing visitor information on individual mobile terminals visiting the system, the visitor information indicating zones where individual mobile terminals visit; a plurality of base stations capable of communicating with mobile terminals; at least one base station controller for controlling radio links between mobile terminals and the base stations; and a packet transportation aid for facilitating to transport a packet to its destination, the packet transportation aid, on the basis of the visitor information in the visitor location register, capable of controlling the base station controller and a necessary base station for transporting a packet to a destination mobile terminal, the packet transportation aid being linked with another communication system, the packet transportation aid retrieving area information on a destination terminal from an outside register when the packet transportation aid has received a packet from a source terminal existing in the corresponding system, recognizing a destination system that can serve the destination terminal on the basis of the area information, and routing the packet directly to the destination system.

Preferably, the packet transportation aid may encapsulate the packet to be routed to the destination system, and may attach information identifying the destination system to the encapsulated packet.

In a preferred embodiment, the packet transportation aid may store the area information on the destination terminal in the visitor location register when the packet transportation aid retrieves the area information from the outside register. The packet transportation aid may retrieve the area information from the visitor location register when the packet transportation aid has received another packet destined for the same destination terminal. The packet transportation aid may recognize the destination system on the basis of the area information, and may route the packet directly to the destination system.

Preferably, when the destination terminal has traveled from the destination system to a second destination system during transportation of packets to the destination terminal, the packet transportation aid may recognize the second destination system on the basis of an area replacement request, and may route an untransmitted packet directly to a second destination system, the area replacement request indicating that the destination terminal exists in the second destination system,

In a preferred embodiment, the packets may be multicast packets. When one of a plurality of destination terminals of the multicast packets has traveled from a destination system to a second destination system during transportation of multicast packets to the destination terminals, the packet transportation aid may recognize the second destination system on the basis of an area replacement request, and may route an untransmitted multicast packet directly to a second destination system, the area replacement request indicating that the destination terminal exists in the second destination system.

In accordance with a further aspect of the present invention, there is provided a system for transporting packet in mobile communications, comprising: a visitor location register for storing visitor information on individual mobile terminals visiting the system, the visitor information indicating zones where individual mobile terminals visit; a plurality of base stations capable of communicating with mobile terminals; at least one base station controller for controlling radio links between mobile terminals and the base stations; and a packet transportation aid for facilitating to transport a packet to its destination, the packet transportation aid, on the basis of the visitor information in the visitor location register, capable of controlling the base station controller and a necessary base station for transporting a packet to a destination mobile terminal, the packet transportation aid being linked with other communication systems, the packet transportation aid issuing an area replacement request to a source system where a source terminal exists when a destination terminal has traveled from a destination system to the corresponding system during reception of packets, the area replacement request indicating that the destination terminal exists in the corresponding system, the packet transportation aid receiving an untransmitted packet from the source system and controlling the base station controller and a necessary base station for transporting the untransmitted packet to the destination terminal.

Preferably, when the destination terminal has traveled from the destination system to the corresponding system during reception of packets, the packet transportation aid may obtain untransmitted packets from the destination system from which the destination terminal has left.

Further objects and advantages of the present invention will be apparent from the following description of the preferred embodiments of the invention as illustrated in the accompanying drawings.

### BRIEF DESCRIPTION OF THE DRAWINGS

Various preferred embodiments according to the present invention will be described hereinafter with reference to the accompanying drawings. In the drawings:
Fig. 1 is a block diagram illustrating a packet transportation system in mobile communications in accordance with a first embodiment of the present invention;
Fig. 2 is a diagram showing a frame format for transporting packets in accordance with the first embodiment of the present invention;
Fig. 3 is an information flow sequence diagram showing operations of the packet transportation system of the first embodiment according to the present invention
Fig. 4 is an information flow sequence diagram representing operations of the packet transportation system for mobile communications in accordance with the second embodiment of the present invention;
Fig. 5 is an information flow sequence diagram representing an operation of the packet transportation system for mobile communications in accordance with the third embodiment of the present invention;
Fig. 6 is an information flow sequence diagram representing an operation of the packet transportation system for mobile communications in accordance with the fourth embodiment of the present invention;
Fig. 7 is a diagram showing a conventional packet communications network;
Fig. 8 is an information flow sequence diagram representing an operation of the conventional packet communications network shown in Fig. 7;
Fig. 9 is a diagram showing another conventional packet communications network; and
Fig. 10 is an information flow sequence diagram representing an operation of the conventional packet communications network shown in Fig. 9.

### DETAILED DESCRIPTION OF PREFERRED EMBODIMENTS OF THE INVENTION

### First Embodiment

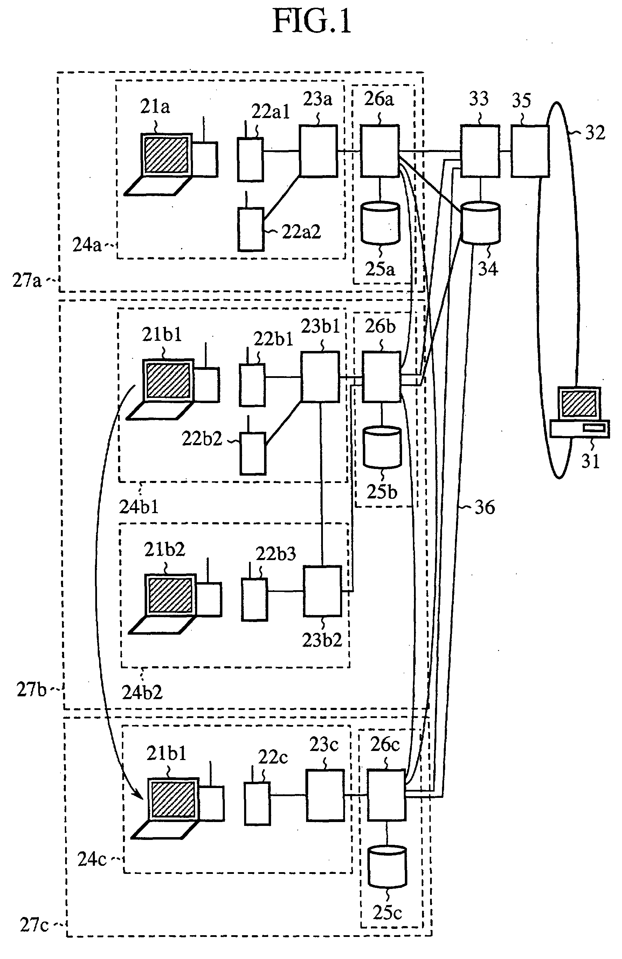

Fig. 1 is a block diagram illustrating a packet transportation system in mobile communications in accordance with a first embodiment of the present invention. In Fig. 1, each of 21a, 21b1, 21b2 designates a mobile terminal that can transmit and receive packets.

Each of 22a1, 22a2, 22b1, 22b2, 22b3, 22c designates a radio base station. Each base station is linked over the air with a plurality of mobile terminals in the respective corresponding zones, and controls communications for the mobile terminals.

Each of 23a, 23b1, 23b2, 23c designates a base station controller. Each base station controller supervises a plurality of radio base stations and controls radio links between mobile terminals and base stations.

24a designates one of a plurality of zones forming an area 27a. The zone 24a is served by the radio base stations 22a1 and 22a2.

24b1 designates one of a plurality of zones forming an area 27b. The zone 24b1 is served by the radio base stations 22b1 and 22b2.

24b2 designates another zone, in the area 27b, served by the radio base station 22b3.

24c designates one of a plurality of zones forming an area 27c. The zone 24c is served by the radio base station 22c.

The packet transportation system is a combined mobile communications network that comprises a subnetwork or system defining the area 27a, another subnetwork or system defining the area 27b, and a further subnetwork or system defining the area 27c.

25a designates a visitor location register for managing and storing visitor information on the mobile terminals visiting the area 27a. The visitor information indicates zones (e.g., the zone 24a) where the individual mobile terminals visit.

25b designates a visitor location register for managing and storing visitor information on the mobile terminals visiting the area 27b. The visitor information indicates zones (e.g., the zone 24b1 and 24b2) where the individual mobile terminals visit.

25c designates a visitor location register for managing and storing visitor information on the mobile terminals visiting the area 27c. The visitor information indicates zones (e.g., the zone 24c) where the individual mobile terminals visit.

26a designates a packet transportation aid for supervising operational procedures of a plurality of radio base stations and base station controllers in an area 27a for transporting packets including multicast packets. Upon the basis of the visitor information in the corresponding visitor location register 25a, the packet transportation aid 26a controls a necessary base station controller and a necessary base station for transporting packets to a destination mobile terminal visiting the zone indicated by the visitor information.

Similarly, 26b designates a packet transportation aid for supervising operational procedures of a plurality of radio base stations and base station controllers in an area 27b for transporting packets including multicast packets. On the basis of the visitor information in the visitor location register 25b, the packet transportation aid 26b controls a necessary base station controller and a necessary base station for transporting packets to a destination terminal.

Similarly, 26c designates a packet transportation aid for supervising operational procedures of a plurality of radio base stations and base station controllers in an area 27c for transporting packets including multicast packets. On the basis of the visitor information in the visitor location register 25c, the packet transportation aid 26a controls a necessary base station controller and a necessary base station for transporting packets to a destination terminal.

Each of the packet transportation aids 26a through 26c has a function for supervising individual mobile terminals' states: "idle", "standby," and "ready." "Idle" state means that the subject terminal is not linked with the network by radio. Secondly, "standby" state is that the terminal is linked with the network wirelessly, but does not transmit or receive packets for a predetermined period. Lastly, "ready" state is that the terminal is linked with the network wirelessly and is transmitting or receiving packets.

In Fig. 1, each of the visitor location registers 25a through 25c is provided separately from the corresponding packet transportation aid 26a, 26b, or 26c. However, it is not intended to limit the present invention to the disclosure. Rather, each of the visitor location registers 25a through 25c may be incorporated into the corresponding packet transportation aid 26a, 26b, or 26c as denoted by dotted rectangles in Fig. 1

31 designates a data processor terminal that can transmit and receive packets. The data processor terminal 31 is served by a fixed packet switching network 32, such as the Internet or Intranet.

33 designates a packet gateway for connecting the packet transportation aids 26a through 26c and the outside fixed packet-switching network 32 with one another. 34 designates a home location register 34 for managing and storing area information on areas where individual mobile terminals exist. 35 designates a gateway belonging to the feed packet switching network 32 for connecting the fixed packet switching network 32 with the combined mobile communications network.

36 designates a transmission line. The packet gateway 33 is connected with the respective packet transportation aids 26a through 26c via transmission lines 36 for transporting packets from one to another. The packet transportation aids 26a through 26c are further interconnected via transmission lines 36 for transporting packets from one to another. The home location register 34 is also connected with the respective packet transportation aids 26a through 26c via transmission lines 36 for transporting various control information flows from one to another.

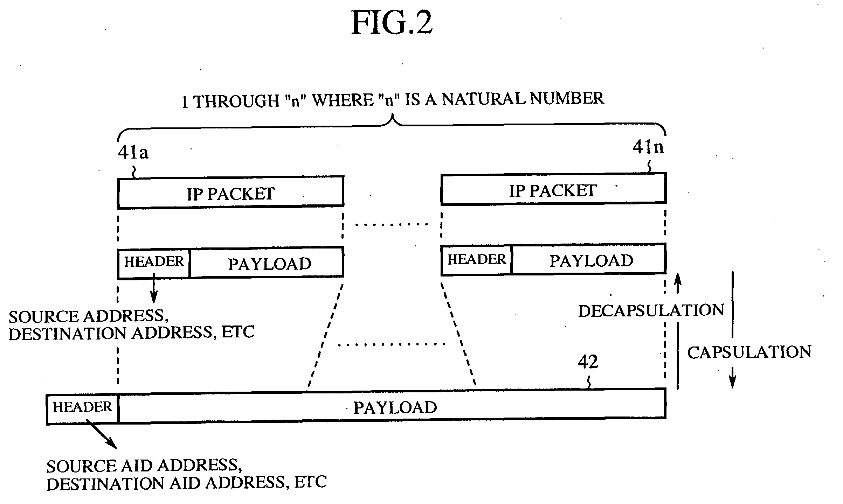

Fig. 2 is a diagram showing a frame format for transporting packets in accordance with the first embodiment of the present invention. The lowermost frame format illustrated at the lowermost part in Fig. 2 is applied to user packets that are transported between the packet gateway 33 and any one of the packet transportation aids 26a through 26c, and that are propagated between any two of the packet transportation aids 26a through 26c.

Packets 41a through 41n are prepared by an end user (more specifically, a source mobile terminal) and processed by another end user (destination mobile terminal). Each packet includes a header containing the source address and destination address (destination information). The source address and destination address are used not only for identifying the source terminal and the destination terminal, but also identifying the locations of respective terminals if the terminals do not move. However, with respect to mobile communications, since any of end users or terminals can travel, purposes of the addresses are limited to identify terminals themselves from one another.

In the embodiment, packets 41a through 41n are encapsulated and assembled into a frame 42 as illustrated. The frame 42 includes a header containing a source aid address and a destination aid address (destination packet transportation aid information). The source aid address identities the address of the packet transportation aid 26a, 26b, or 26c that corresponds to the area where the source terminal visits. The destination aid address indicates the address of the packet transportation aid 26a, 26b, or 26c that corresponds to the area where the destination terminal visits.

The frame 42 resulting from the encapsulation of the packets 41a through 41n can be transported between the packet transportation aids. In this transportation step, no reference is made to the source address and destination address attached to the inside respective packets by both packet transportation aids. Rather, only the source aid address and the destination aid address are referenced. Thus, the packet transportation aid that serves the source terminal can fix the route of the packets (frame) readily for itself.

The frame 42 may have any suitable format. For example, it is possible to use the format prescribed by a protocol arranged between the packet transportation aids, or the format determined in a commonly adopted protocol, e.g., an internet protocol (IP) that also determines the format of user packets.

The frame 42 may contain a plurality of packets destined for a sole mobile terminal as mentioned above. However, the frame 42 may contain a plurality of packets destined for different mobile terminals that visit the same area. Alternatively, it is possible that the frame 42 includes a sole packet destined for a sole mobile terminal.

Furthermore, Fig. 2 shows IP packets as packets 41a through 41n. However, it is not intended to limit the present invention to the disclosure. Rather, any other suitable packets prescribed by any other suitable protocol may be used.

In the first embodiment, once a packet transportation aid receives a packet from a source mobile terminal, the packet transportation aid, on the basis of the destination address contained in the packet, retrieves from the home location register 34 information on the area where the destination mobile terminal visits. The packet transportation aid attaches the packet the source aid address and the destination aid address. Then, the packet transportation aid, for itself, routes the packet directly to the packet transportation aid which can serve the destination mobile terminal.

Prior to description of an operation, assume that the source mobile terminal is the mobile terminal 21a, and the packet transportation aid 26a receives packets from the source mobile terminal 21a at first. Furthermore, assume that the destination mobile terminal is the mobile terminal 21b1 which exists in the area managed by the packet transportation aid 26b.

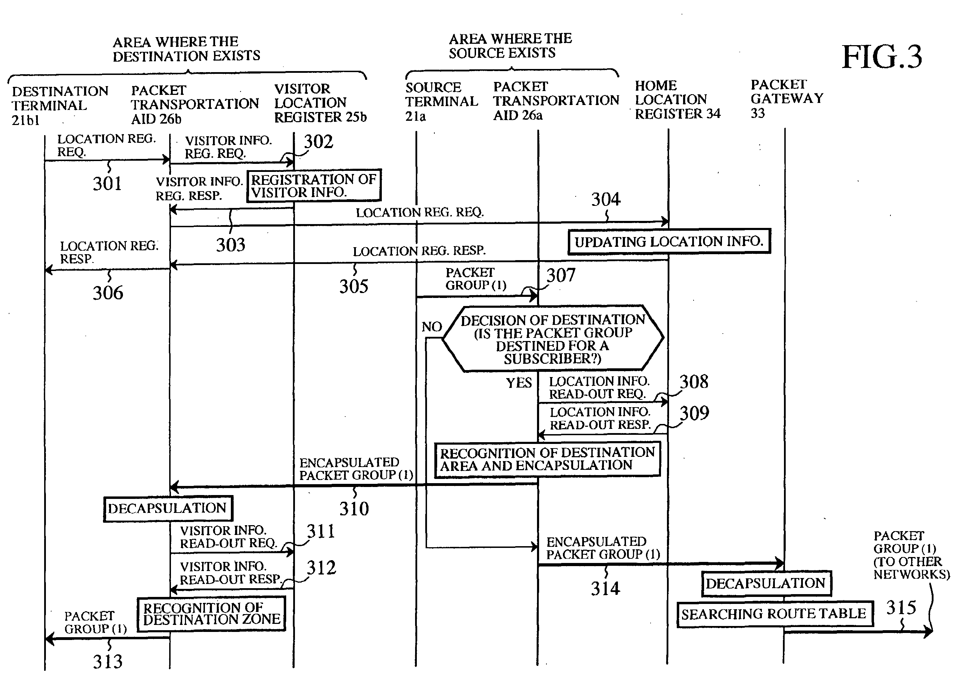

Next, operations of the system will be described. Fig. 3 is an information flow sequence diagram showing operations of the packet transportation system of the first embodiment according to the present invention.

In the embodiment, whenever a mobile terminal moves from an area to another area, the mobile terminal issues a location registration request to the home location register 34, whereby the home location register 34 updates the area information about the mobile terminal.

For example, as shown in Fig. 3, when the destination mobile terminal 21b1 enters the area of the packet transportation aid 26b, it issues a location registration request to the packet transportation aid 26b to link with the combined mobile communications network as depicted by flow 301. On the basis of information in the location registration request, the packet transportation aid 26b issues a visitor information registration request to the visitor location register 25b as depicted by flow 302. The visitor information registration request contains visitor information, the ID of the mobile terminal 21b1, and other necessary information. The visitor information indicates that the mobile terminal 21b 1 visits the zone 24b supervised by the radio base station 22b1 and base station controller 23b1.

Then, the visitor location register 25b registers the visitor information and the ID, and issues a visitor information registration response to the packet transportation aid 26b as depicted by flow 303.

Then, the packet transportation aid 26b attaches to the location registration request a code indicating the area 27b where the packet transportation aid 26b itself exists, and then,-sends the location registration request to the home location register 34 as depicted by flow 304.

Upon receiving the location registration request, the home location register 34 authenticates the mobile terminal 21b1 on the basis of the location registration request, thereby confirming whether or not the mobile terminal 21b1 is a subscriber of the combined mobile communications network supervised by the home location register 34 itself. If the authentification is affirmative, the home location register 34 stores the code identifying the area 27b sent from the packet transportation aid 26b together with the ID of the mobile terminal 21b1, thereby updating the information on the location of the mobile terminal 21b1. Additionally, the home location register 34 issues a location registration response to the destination mobile terminal 21b1 via the packet transportation aid 26b for acknowledging the completion of location registration, as depicted by flows 305 and 306.

Although not illustrated in Fig. 3, the above-described routine is carried out whenever each mobile terminal moves from an area to another area. The same is true of the source mobile terminal 21a.

Next, a packet transportation operation will be described with reference to the same drawing. Assume that the source mobile terminal 21a transmits a packet group (1) as depicted by flow 307. The packet group (1) consists of the packets 41a through 41n illustrated in Fig. 2, each containing the source address for the mobile terminal 21a and the destination address for the mobile terminal 21b1.

The radio base station 22a1 and the base station controller 23a relay the packet group (1), whereby the packet transportation aid 26a receives the packet group (1) and decides, on the basis of the destination address indicating the mobile terminal 21b1, whether or not the packet group (1) is destined for a mobile terminal of a subscriber of the combined mobile communications network. The decision is affirmative since the mobile terminal 21b1 is one of a plurality of subscribers, and the packet transportation aid 26a issues a location information read-out request to the home location register 34 as depicted by flow 308, so as to acquire a location information read-out response from the home location register 34 as depicted by flow 309. The location information read-out response contains the area information indicating the area 27b where the subject mobile terminal 21b1 visits.

From the area information acquired, the packet transportation aid 26a recognizes that the destination mobile terminal 21b1 visits the area 27b. Furthermore, packet transportation aid 26a encapsulates the packet group (1) to assemble a frame 42 as illustrated in Fig. 2 and attaches to the frame 42 the source aid address representing the packet transportation aid 26a and the destination aid address indicating the packet transportation aid 26b for serving the area 27b. The packet transportation aid 26a then transfers the frame 42 containing the packet group (1) to the packet transportation aid 26b of the area 27b where the subject mobile terminal 21b1 visits as depicted by flow 310.

Upon receiving it, the destination packet transportation aid 26b decapsulates the packet group (1) and extracts the respective packets 41a through 41n. The packet transportation aid 26b recognizes that the destination is the mobile terminal 21b1 by virtue of the destination address attached each of the packets 41a through 41n.

The packet transportation aid 26b then issues a visitor information read-out request to the visitor location register 25b as depicted by flow 311 and receives a visitor information read-out response from the visitor location register 25b as depicted by flow 312, thereby retrieving the visitor information about the mobile terminal 21b1 from the visitor location register 25b. Consequently, the packet transportation aid 26b recognizes that destination mobile terminal 21b1 exists in the zone 24b1. Furthermore, the packet group (1) is transferred from the packet transportation aid 26b via base station controller 23b1 and the radio base station 22b1 to the mobile terminal 21b1 as depicted by flow 313.

In contrast, if the packet transportation aid 26a decides that a received packet group is not destined for any mobile terminal of subscribers of the combined mobile communications network, it transfers the encapsulated packet group to the packet gateway 33 as depicted by flow 314. At this stage, the packet transportation aid 26a encapsulates the packet group (1) and attaches the encapsulated packet group (1) a destination aid address identifying the packet gateway 33. The packet gateway 33 decapsulates the packets and searches a route table for the destination address attached to each of the packets in order to fix the route of the packets.

Then, the packet gateway 33 transfers the packets to the gateway 35 for transporting them to outside destination, for example, the data processor terminal 31 in the fixed packet switching network 32, as depicted by flow 315. As mentioned above, it is possible to exchange packets between the packet gateway 33 and each of the packet transportation aids 26a through 26c.

The first embodiment exemplifies a direct routing from the packet transportation aid 26a to the packet transportation aid 26b. However, it is not intended to limit the present invention to the disclosure. In a similar manner, the system of the fist embodiment can conduct other direct routing between the packet gateway 33 and any of the packet transportation aids 26a through 26c, and between any two of the packet transportation aids 26a through 26c.

In accordance with the first embodiment, the packet transportation aid, which has received packets at first from the source mobile terminal, can directly route the packets to the packet transportation aid of which the area where the destination mobile terminal visits. In other words, it is possible to optimize the route for communication, thereby decreasing transfer delay and enhancing the efficiency of packet transportation.

### Second Embodiment

Next, a second embodiment of the present invention will be described.

Structural elements in the packet transportation system for mobile communications in accordance with the second embodiment are the same as those in the first embodiment in Fig. 1. The same frame format illustrated in Fig. 2 is also applied to user packets that are transported between the packet gateway 33 and any one of the packet transportation aids 26a through 26c, and that are transported between any two of the packet transportation aids 26a through 26c.

In the second embodiment, when a packet transportation aid that has received packets at first from the source mobile terminal has acquired area information on the area where the destination visits, the packet transportation aid stores the area information in the accompanying visitor location register for managing the area information about the mobile terminal.

When the packet transportation aid has received packets, from another mobile terminal, destined for the mobile terminal of which the area information has been stored in the visitor location register, the packet transportation aid routes the packets directly to the packet transportation aid where the mobile terminal visits by virtue of the area information.

Prior to detailed description of operations, assume that the source mobile terminal is the mobile terminal 21b1, and that the packet transportation aid 26b receives packets from the source mobile terminal 21b1 at first, so that the area information is stored in the accompanying visitor location register 25b. In addition, assume that the destination terminal is the mobile terminal 21a visiting the area of the packet transportation aid 26a. Furthermore, assume that thereafter another source mobile terminal issues packets to the same destination mobile terminal 21a.

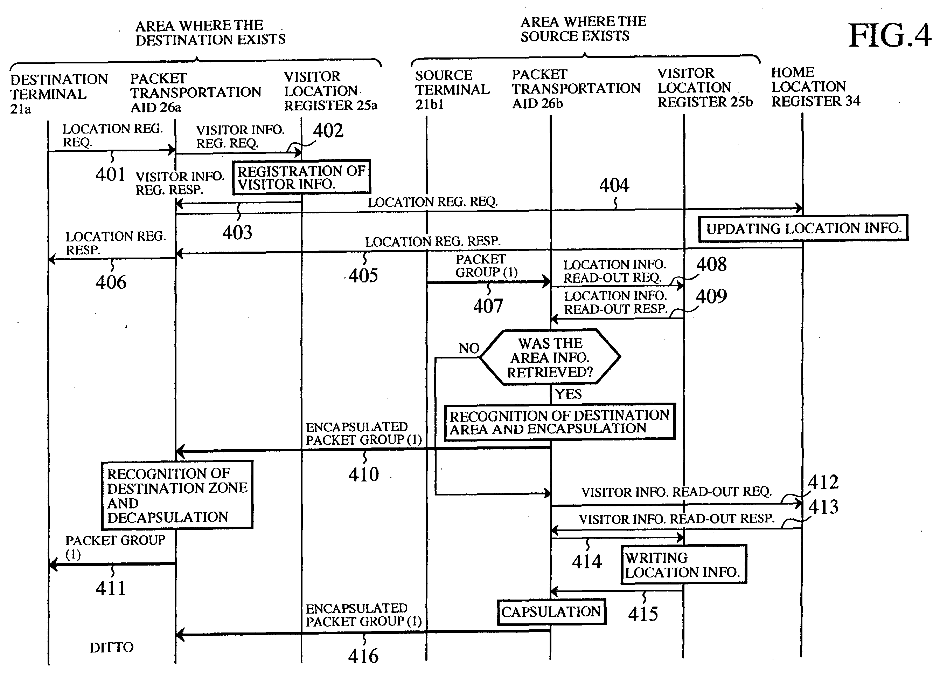

Next, operations of the system will be described. Fig. 4 is an information flow sequence diagram representing operations of the packet transportation system for mobile communications in accordance with the second embodiment of the present invention. As will be understood from information flows 401 through 406 in Fig. 2, the location registration procedure for each mobile terminal is also carried out in the second embodiment. Since the location registration procedure is the same as that of the first embodiment, it will not be described in detail.

Assume that the source mobile terminal 21b1 transmits a packet group (1) as depicted by flow 407. The packet transportation aid 26b receives the packet group (1) and decides, on the basis of the destination address indicating the mobile terminal 21a, whether or not the packet group (1) is destined for a mobile terminal of a subscriber of the mobile communications network. The decision is affirmative, and the packet transportation aid 26b issues a visitor information read-out request to the visitor location register 25b as depicted by flow 408, so as to acquire a visitor information read-out response from the visitor location register 25b as depicted by flow 409. If the area information on the mobile terminal 21a is already stored in the visitor location register 25b, the visitor information read-out response contains the area information indicating the area 27a where the subject mobile terminal 21a visits.

If the area information is already stored in the visitor location register 25b and the packet transportation aid 26b can have acquired the area information from the visitor location register 25b, the packet transportation aid 26b recognizes by the area information that the packet group (1) should be routed to the packet transportation aid 26a. Furthermore, packet transportation aid 26b encapsulates the packet group (1) to assemble a frame 42 as illustrated in Fig. 2 and attaches to the frame 42 the source aid address indicating the packet transportation aid 26b and the destination aid address representing the packet transportation aid 26a. The packet transportation aid 26b then sends out the frame 42 containing the packet group (1) to the packet transportation aid 26a where the subject mobile terminal 21a visits as depicted by flow 410.

Upon receiving it, the destination packet transportation aid 26a decapsulates the packet group (1) and derives the respective packet group (1). The packet transportation aid 26a recognizes that the destination is the mobile terminal 21a and determines that it visits the zone 24a by a procedure resembling the procedure depicted by flows 311 and 312 in Fig. 3. The packet transportation aid 26a then transfers the packet group (1) to the mobile terminal 21a via the base station controller 23a and the radio base station 22a1 as depicted by flow 411.

In contrast, if the packet transportation aid 26b cannot have retrieved$om the visitor location register25b the area information of the mobile terminal 21a, the packet transportation aid 26b issues a location information read out request to the home location register 34 as depicted by flow 412. In response, the home location register 34 issues a location information read out response to the packet transportation aid 26b as depicted by flow 413, whereby the packet transportation aid 26b obtains the area information (area code) of the destination mobile terminal 21a contained in the location information

The packet transportation aid 26b then causes the area information to be registered in the accompanying visitor location register 25b as depicted by flows 414 and 415. Next, the packet group (1) is transferred to the packet transportation aid 26a as depicted by flow 416, and finally transferred to the destination mobile terminal 21a, as similar to the above-described manner for the situation where the area information has been already stored in the visitor location register 25b.

Thereafter, if another mobile terminal 21b2 issues packets destined for the same terminal 21a, the packet transportation aid 26b decides, on the basis of the destination address indicating the terminal 21a, whether or not the packets are destined for a mobile terminal of a subscriber of the combined mobile communications network. The decision is affirmative, and the packet transportation aid 26b retrieves the area information of the mobile terminal 21a from the visitor location register 25b by the steps similar to flows 408 and 409. Then, the packet transportation aid 26b determines that the packets should be routed to the packet transportation aid 26a. The packet transportation aid 26b then encapsulates the packets to assembly a frame and sends out the frame to the packet transportation aid 26a of the area 27a where the destination mobile terminal 21a visits.

In the second embodiment, packets transmitted second are originated from the mobile terminal 21b2. However, it is not intended to limit the present invention to the disclosure. Rather, any other mobile terminals including the mobile terminal 21b2 may originate packets.

As described above, in accordance with the second embodiment, the packet transportation aid that has first received packets from a source mobile terminal served by the network can route the packets directly to the packet transportation aid of the area where the destination mobile terminal exists, on the basis of the area information stored in the corresponding visitor location register. Thus, the decision of route can be quicker, and the packets may be propagated efficiently.

### Third Embodiment

Next, a third embodiment of the present invention will be described.

Structural elements in the packet transportation system for mobile communications in accordance with the third embodiment are the same as those in the first embodiment in Fig. 1. The same frame format illustrated in Fig. 2 is also applied to user packets that are transported between the packet gateway 33 and any one of the packet transportation aids 26a through 26c, and that are transported between any two of the packet transportation aids 26a through 26c.

In the third embodiment, if a destination mobile terminal moves from an area to another during propagation of packets, information on the area is updated. Due to updating, upon receiving an area update request, the packet transportation aid where the mobile terminal newly visits issues an area replacement request to the packet transportation aid receiving packets from the source mobile terminal at first. Upon receiving the area replacement request, the packet transportation aid can appropriately select the route for packets to the new packet transportation aid of the area where the destination mobile terminal newly visits.

Prior to detailed description of an operation, assume that the source mobile terminal is the mobile terminal 21a, and that the packet transportation aid 26a receives packets from the source mobile terminal 21a at first. Furthermore, assume that the destination terminal is the mobile terminal 21a that is traveling from the area 27b to the area 27a, so as to be newly served by the packet transportation aid 26c.

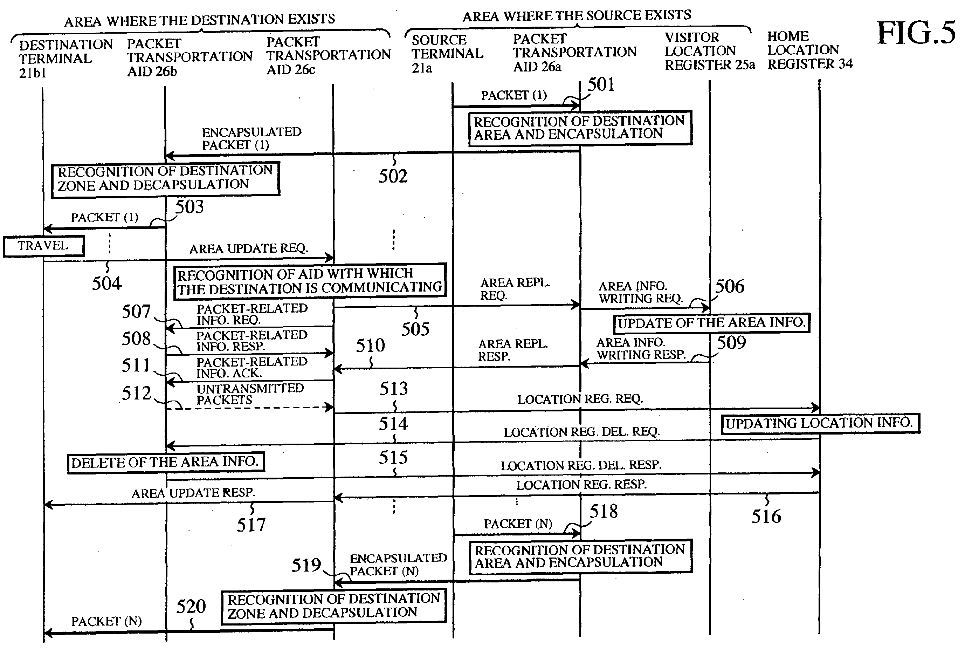

Next, an operation of the system will be described. Fig. 5 is an information flow sequence diagram representing an operation of the packet transportation system for mobile communications in accordance with the third embodiment of the present invention. As represented in the drawing, a packet (1) destined for the destination mobile terminal 21b1 from the source mobile terminal 21a is, at first, received by the packet transportation aid 26a as depicted by flow 501. The packet transportation aid 26a of the area where the mobile terminal 21a visits determines the area to which the packet should be transported. The packet transportation aid 26a encapsulates the packet to assembly a frame and sends out the dame to the packet transportation aid 26b of the area 27b where the destination mobile terminal 21b visits, as depicted by flow 502.

Upon receiving it, the destination packet transportation aid 26b extracts the packet (1). The packet transportation aid 26b recognizes that the destination is the mobile terminal 21b1, determines that it visits the zone 24b1 by a procedure resembling the procedure depicted by flows 311 and 312 in Fig. 3. The packet transportation aid 26b then transfers the packet (1) to the mobile terminal 21b via the base station controller 23b1 and the radio base station 22b, as depicted by flow 503.

If the destination mobile terminal 21b1 travels from the area 27b to the area 27c while a plurality of packets destined for the mobile terminal 21b1 are propagated from the source mobile terminal 21a, the mobile terminal 21b1 issues an area update request to the packet transportation aid 26c where it newly visits as depicted by flow 504. The packet transportation aid 26c, based on the received area update request, recognizes that the mobile terminal 21b1 is communicating with the packet transportation aid 26a, and sends an area replacement request to the packet transportation aid 26a as depicted by flow 505.

Upon receiving the area replacement request, the packet transportation aid 26a causes the visitor location register 25a to update the area information on the mobile terminal 21b1, and to update the route information on the mobile terminal 21b1, as depicted by flows 506 and 509. That is, it issues an area information writing request to the visitor location register 25a as depicted by flow 506 and receives an area information writing response from the visitor location register 25a as depicted by flow 509. Then, the packet transportation aid 26a returns an area replacement response to the packet transportation aid 26c as depicted by flow 510.

After receiving the area replacement response, the packet transportation aid 26c issues a location registration request to the home location register 34 as depicted by flow 513, The home location register 34 then updates the location information on the mobile terminal 21b1, and issues a location registration deletion request to the packet transportation aid 26b from which the mobile terminal 21b1 has left, as depicted by flow 514. The packet transportation aid 26b, based on the location registration deletion request, recognizes that the visitor information on the mobile terminal 21b1 that has traveled to another area is no longer valid, and deletes the visitor information on the mobile terminal 21b1 from the list in the visitor location register 25b. Then, the packet transportation aid 26b sends a location registration deletion response to the home location register 34 as depicted by flow 515.

Upon receiving the location registration deletion response, the home location register 34 returns a location registration response to the packet transportation aid 26c as depicted by flow 516. The packet transportation aid 26c then returns an area update response to the mobile terminal 21b1 as depicted by flow 517.

Assume that a packet untransmitted yet from the mobile terminal 21a is referred to as packet (N) as depicted by flow 518. Before the packet (N) destined for the mobile terminal 21b1 is issued from a source mobile terminal visiting the packet transportation aid 26a, e.g., the mobile terminal 21a, the route to the mobile terminal 21b1 has been already replaced by the new one terminating the new packet transportation aid 26c. Therefore, upon receiving packets (N), the packet transportation aid 26a encapsulates the packet (N) and sends the encapsulated packet to the packet transportation aid 26c as depicted by flow 519. The packet transportation aid 26c decapsulates the packet (N), recognizes that the destination is the mobile terminal 21b1, determines that it visits the zone 24c by a manner similar to the above-described procedure, and transfers the packet (N) to the mobile terminal 21b1 via the base station controller 23c and the radio base station 22b, as depicted by flow 520.

When the packet transportation aid 26c negotiates with the packet transportation aid 26a for replacing the route, the packet transportation aid 26c exchanges packet-related information with the packet transportation aid 26b as depicted by flows 507, 508, and 511. Accordingly, it can receive untransmitted packets destined for the mobile terminal 21b1 as depicted by flow 512. These packets are sent out from the source terminal 21a before the packet (N). More specifically, the packet transportation aid 26b temporally stores the packets before transmitting to the destination mobile terminal 21b1. On demand from the packet transportation aid 26c, the packet transportation aid 26b propagates the untransmitted packets to the packet transportation aid 26c, so that the packet transportation aid 26c relays the packets to the destination mobile terminal 21b1. This enables the mobile terminal 21b1 to receive all packets successfully.

In accordance with the third embodiment, although the destination mobile terminal moves from an area to another during propagation of packets, the packet transportation aid that has first received the packets properly selects the for untransmitted packets to the new packet transportation aid of the area where the destination mobile terminal newly visits. In this embodiment, the packet transportation aid can also directly route to the other packet transportation aid for itself. In other words, it is possible to optimize the route for communication, thereby decreasing transfer delay and enhancing the efficiency of packet transportation.

### Fourth Embodiment

Next, a fourth embodiment of the present invention will be described.

Structural elements in the packet transportation system for mobile communications in accordance with the fourth embodiment are the same as those in the first embodiment in Fig. 1. The same frame format illustrated in Fig. 2 is also applied to user packets that are transported between the packet gateway 33 and any one of the packet transportation aids 26a through 26c, and that are transported between any two of the packet transportation aids 26a through 26c.

The fourth embodiment is a modification of the third embodiment to which applied is delivery of multicast packets destined for a plurality of destination mobile terminals. If one of a plurality of destinations of the multicast packets has moved from an area to another during propagation of packets, it is possible to determine that it has been unnecessary to transmit successive untransmitted packets to the packet transportation aid of the area from which the destination terminal has left. Then, the proper route can be selected and the successive untransmitted packets, if any, may be delivered successfully.

Prior to detailed description of an operation, assume that the source mobile terminal is the mobile terminal 21a, and that the packet transportation aid 26a receives packets from the source mobile terminal 21a at first. Furthermore, assume that one of a plurality of the destination terminals is the mobile terminal 21a that is traveling from the area 27b to the area 27a, so as to be newly served by the packet transportation aid 26c.

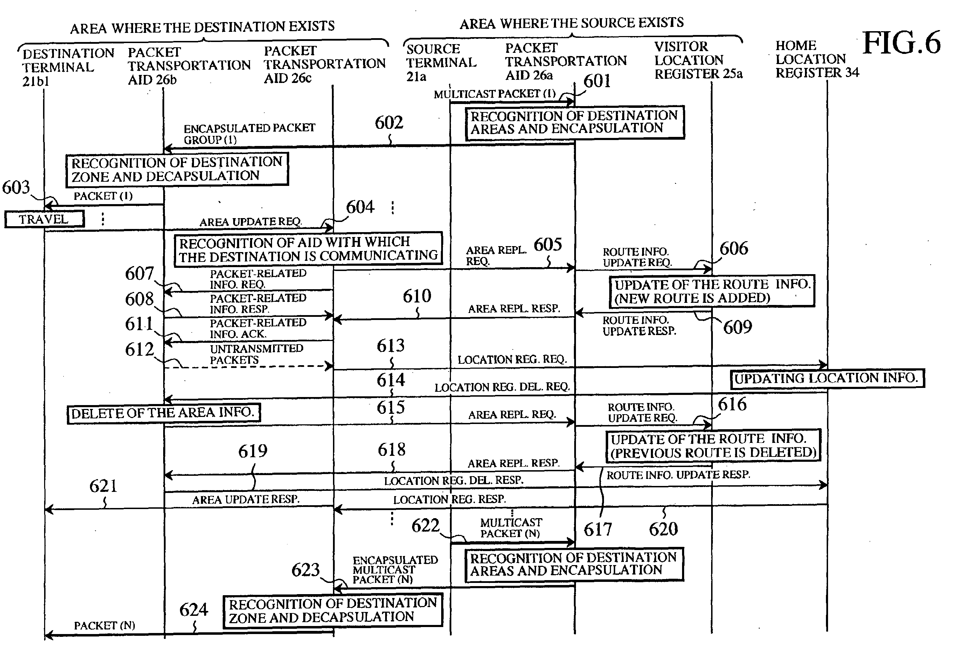

Next, an operation of the system will be described. Fig. 6 is an information flow sequence diagram representing an operation of the packet transportation system for mobile communications in accordance with the fourth embodiment of the present invention. As represented in the drawing, a multicast packet (1) destined for a plurality of mobile terminals including the mobile terminal 21b1 from the source mobile terminal 21a is, at first, received by the packet transportation aid 26a as depicted by flow 601. The packet transportation aid 26a of the area 27a where the source terminal 21a visits determines the areas to which the multicast packet should be transported. The packet transportation aid 26a encapsulates the packet to assembly a dame and sends out the frame to plural packet transportation aids corresponding to destinations. For example, the frame is conveyed to the packet transportation aid 26b of the area 27b where the destination mobile terminal 21b visits, as depicted by flow 602.

Upon receiving it, the destination packet transportation aid 26b extracts the multicast packet (1) and recognizes the plural destinations of the packet (1). When one of the destinations is the mobile terminal 21b1, the packet transportation aid 26b determines that it visits the zone 24b1 by a manner similar to the above-described procedure, and transfers the packet (1) to the mobile terminal 21b via the base station controller 23b1 and the radio base station 22b, as depicted by flow 603.

If the destination mobile terminal 21b1 travels from the area 27b to the area 27c while a plurality of multicast packets are propagated from the source mobile terminal 21a, the mobile terminal 21b1 issues an area update request to the packet transportation aid 26c where it newly visits as depicted by flow 604. The packet transportation aid 26c, based on the area update request, recognizes that the mobile terminal 21b1 is communicating with the packet transportation aid 26a, and sends an area replacement request to the packet transportation aid 26a as depicted by flow 605.

Upon receiving the area replacement request, the packet transportation aid 26a causes the visitor location register 25a to update the area information on the mobile terminal 21b1, and to update the route information on the mobile terminal 21b1, as depicted by flows 606 and 609. That is, it issues a route information writing request to the visitor location register 25a as depicted by flow 606 and receives a route information writing response from the visitor location register 25a as depicted by flow 609. In this update, information on the new route is added. Then, the packet transportation aid 26a returns an area replacement response to the packet transportation aid 26c as depicted by flow 610.

After receiving the area replacement response, the packet transportation aid 26c issues a location registration request to the home location register 34 as depicted by flow 613. The home location register 34 then updates the location information on the mobile terminal 21b1, and issues a location registration deletion request to the packet transportation aid 26b from which the mobile terminal 21b1 has left, as depicted by flow 614. The packet transportation aid 26b, based on the location registration deletion request, recognizes that the visitor information on the mobile terminal 21b1 that has traveled to another area is no longer valid, and deletes the visitor information on the mobile terminal 21b1 from the list in the visitor location register 25b. Then, the packet transportation aid 26b sends an area replacement request to the packet transportation aid 26c as depicted by flow 615.

Upon receiving the area replacement request, the packet transportation aid 26a causes the visitor location register 25a to update the area information on the mobile terminal 21b1, and to update the route information on the mobile terminal 21b1, as depicted by flows 616 and 617. That is, it issues a route information writing request to the visitor location register 25a as depicted by flow 616 and receives a route information writing response from the visitor location register 25a as depicted by flow 617. In this update, information on the previous route is deleted to stop delivering. Then, the packet transportation aid 26a returns an area replacement response to the packet transportation aid 26c as depicted by flow 618 and returns a location registration deletion response to the home location register 34 as depicted by flow 619.

Upon receiving the location registration deletion response, the home location register 34 returns a location registration response to the packet transportation aid 26c as depicted by flow 620. The packet transportation aid 26c then returns an area update response to the mobile terminal 21b1 as depicted by flow 621.

Before the multicast packet (N) is, as depicted by flow 622, issued from a source mobile terminal visiting the area 27a of the packet transportation aid 26a, e.g., the mobile terminal 21a, the route to the mobile terminal 21b1 has been already replaced by the new one terminating the new packet transportation aid 26c. Therefore, upon receiving multicast packets (N) from the source terminal, the packet transportation aid 26a can send the encapsulated packet to the packet transportation aid 26c, which is one of a plurality of the destination-related aids, as depicted by flow 623. The packet transportation aid 26c decapsulates the packet (N), recognizes that one of the destinations is the mobile terminal 21b1. Then, packet transportation aid 26c determines that it visits the zone 24c by the above-mentioned manner, and transfers the multicast packet (N) to the mobile terminal 21b1 via the base station controller 23c and the radio base station 22b, as depicted by flow 624

In accordance with the fourth embodiment, although one of the destination mobile terminals moves from an area to another during propagation of packets, the packet transportation aid that has first received the multicast packets properly selects the route for untransmitted packets to the new packet transportation aid where the destination mobile terminal is currently visiting. In this embodiment, the packet transportation aid can also directly route to the other packet transportation aid for itself. In other words, it is possible to optimize the route for communication, thereby avoiding a malfunction in the transmission of the multicast packet, decreasing transfer delay, and enhancing the efficiency of packet transportation.

While the present invention has been particularly shown and described with references to preferred embodiments thereof, it will be understood by those skilled in the art that various changes in form and details may be made therein without departing from the spirit and scope of the invention as defined by the claims. Such variations, alterations, and modifications are intended to be as equivalents encompasses in the scope of the claims.

## Claims

1. A system for transporting packet in mobile communications, comprising:
a plurality of subnetworks (27a, 27b, 27c), each subnetwork including:
a visitor location register (25a, 25b, 25c) for storing visitor information on individual mobile terminals (21a, 21b1, 21b2) visiting the corresponding subnetwork, the visitor information indicating zones (24a, 24b1, 24b2, 24c) where individual mobile terminals visit;
a plurality of base stations (22a1, 22a2, 22b1, 22b2, 22c) capable of communicating with mobile terminals;
at least one base station controller (23a, 23b, 23c) for controlling radio links between mobile terminals and the base stations; and
a packet transportation aid (26a, 26b, 26c) for facilitating to transport a packet to its destination, the packet transportation aid, on the basis of the visitor information in the corresponding visitor location register, capable of controlling the base station controller and a necessary base station for transporting a packet to a destination mobile terminal,
the system further comprising:
a gateway (33) for interlinking the subnetworks; and
a home location register (34) for storing area information about subnetworks in which individual mobile terminals of subscribers of the system currently exist,
the packet transportation aid (26a, 26b, 26c) of each of the subnetworks (27a, 27b, 27c) retrieving the area information on a destination terminal (21a, 21b1, 21b2) from the home location register when the packet transportation aid has received a packet from a source terminal (21a, 21b1, 21b2) existing in the corresponding subnetwork, recognizing a destination subnetwork (27a, 27b, 27c) that can serve the destination terminal on the basis of the area information, and routing the packet directly to a destination packet transportation aid (26a, 26b, 26c) of the destination subnetwork.

2. A system according to claim 1, wherein the packet transportation aid (26a, 26b, 26c) of each of the subnetworks (27a, 27b, 27c) encapsulates the packet to be routed to the destination packet transportation aid (26a, 26b, 26c), and attaches destination packet transportation aid information identifying the destination packet transportation aid to the encapsulated packet.

3. A system according to claim 1, wherein the gateway is linked with an outside packet-switching network, the packet transportation aid (26a, 26b, 26c) of each of the subnetworks (27a, 27b, 27c) transferring a packet to the gateway (33) when the packet is not destined for terminals of subscribers of the subnetworks, the gateway further transferring the packet to the outside packet switching network (32).

4. A system according to claim 3, wherein the packet transportation aid (26a, 26b, 26c) of each of the subnetworks (27a, 27b, 27c) encapsulates the packet to be routed to the destination packet transportation aid (26a, 26b, 26c) or the gateway (33), and attaches destination packet transportation aid information identifying the destination packet transportation aid or the gateway to the encapsulated packet.

5. A system according to any one of claims 1 through 4, wherein the packet transportation aid (26a, 26b, 26c) of each of the subnetworks (27a, 27b, 27c) stores the area information on the destination terminal in the corresponding visitor location register (25a, 25b, 25c) when the packet transportation aid retrieves the area information from the home location register (34), the packet transportation aid retrieving the area information from the visitor location register when the packet transportation aid has received another packet destined for the same destination terminal (21a, 21b1, 21b2), recognizing the destination subnetwork on the basis of the area information, and routing the packet directly to the destination packet transportation aid of the destination subnetwork.

6. A system according to any one of claims 1 through 5, wherein when the destination terminal (21a, 21b1, 21b2) has traveled from the destination subnetwork (27a, 27b, 27c) to a second destination subnetwork (27a, 27b, 27c) during transportation of packets to the destination terminal, a second destination packet transportation aid (26a, 26b, 26c) corresponding to the second destination subnetwork issues an area replacement request to the packet transportation aid (26a, 26b, 26c) of the subnetwork where the source terminal (21a, 21b1, 21b2) exists, the area replacement request indicating that the destination terminal exists in the second destination subnetwork, the packet transportation aid of the subnetwork where the source terminal exists recognizing the second destination subnetwork on the basis of the area replacement request, and routing an untransmitted packet directly to a second destination packet transportation aid of the second destination subnetwork.

7. A system according to any one of claims 1 through 5, wherein the packets are multicast packets, and wherein when one of a plurality of destination terminals (21a, 21b1, 21b2) of the multicast packets has traveled from a destination subnetwork (27a, 27b, 27c) to a second destination subnetwork (27a, 27b, 27c) during transportation of multicast packets to the destination terminals, a second destination packet transportation aid (26a, 26b, 26c) corresponding to the second subnetwork issues an area replacement request to the packet transportation aid of the subnetwork where the source terminal exists, the area replacement request indicating that the destination terminal exists in the second destination subnetwork, the packet transportation aid (26a, 26b, 26c) of the subnetwork where the source terminal (21a, 21b1, 21b2) exists recognizing the second destination subnetwork on the basis of the area replacement request, and routing an untransmitted multicast packet directly to a second destination packet transportation aid of the second destination subnetwork.

8. A system according to claim 6 or 7, wherein when the destination terminal (21a, 21b1, 21b2) has traveled from the destination subnetwork (27a, 27b, 27c) to a second destination subnetwork (27a, 27b, 27c) during transportation of packets to the destination terminal, a second destination packet transportation aid (26a, 26b, 26c) corresponding to the second destination subnetwork obtains untransmitted packets from the destination packet transportation aid of the destination subnetwork from which the destination terminal has left.

9. A system (27a, 27b, 27c) for transporting packet in mobile communications, comprising:
a visitor location register (25a, 25b, 25c) for storing visitor information on individual mobile terminals (21a, 21b1, 21b2) visiting the system, the visitor information indicating zones (24a, 24b1, 24b2, 24c) where individual mobile terminals visit;
a plurality of base stations (22a1, 22a2, 22b1, 22b2, 22c) capable of communicating with mobile terminals;
at least one base station controller (23a, 23b, 23c) for controlling radio links between mobile terminals and the base stations; and
a packet transportation aid (26a, 26b, 26c) for facilitating to transport a packet to its destination, the packet transportation aid, on the basis of the visitor information in the visitor location register, capable of controlling the base station controller and a necessary base station for transporting a packet to a destination mobile terminal, the packet transportation aid being linked with another communication system (27a, 27b, 27c), the packet transportation aid retrieving area information on a destination terminal (21a, 21b1, 21b2) from an outside register (34) when the packet transportation aid has received a packet from a source terminal (21a, 21b1, 21b2) existing in the corresponding system, recognizing a destination system (27a, 27b, 27c) that can serve the destination terminal on the basis of the area information, and routing the packet directly to the destination system.

10. A system according to claim 9, wherein the packet transportation aid (26a, 26b, 26c) encapsulates the packet to be routed to the destination system, and attaches information identifying the destination system (27a, 27b, 27c) to the encapsulated packet.

11. A system according to claim 9 or 10, wherein the packet transportation aid (26a, 26b, 26c) stores the area information on the destination terminal in the visitor location register (25a, 25b, 25c) when the packet transportation aid retrieves the area information from the outside register (34), the packet transportation aid retrieving the area information from the visitor location register when the packet transportation aid has received another packet destined for the same destination terminal (21a, 21b1, 21b2), recognizing the destination system on the basis of the area information, and routing the packet directly to the destination system.

12. A system according to any one of claims 9 through 11, wherein when the destination terminal (21a, 21b1, 21b2) has traveled from the destination system (27a, 27b, 27c) to a second destination system (27a, 27b, 27c) during transportation of packets to the destination terminal, the packet transportation aid (26a, 26b, 26c) recognizes the second destination system on the basis of an area replacement request, and routes an untransmitted packet directly to a second destination system, the area replacement request indicating that the destination terminal exists in the second destination system,

13. A system according to any one of claims 9 through 11, wherein the packets are multicast packets, and wherein when one of a plurality of destination terminals (21a, 21b1, 21b2) of the multicast packets has traveled from a destination system (27a, 27b, 27c) to a second destination system (27a, 27b, 27c) during transportation of multicast packets to the destination terminals, the packet transportation aid (26a, 26b, 26c) recognizes the second destination system on the basis of an area replacement request, and routes an untransmitted multicast packet directly to a second destination system, the area replacement request indicating that the destination terminal exists in the second destination system.

14. A system (27a, 27b, 27c) for transporting packet in mobile communications, comprising:
a visitor location register (25a, 25b, 25c) for storing visitor information on individual mobile terminals (21a, 21b1, 21b2) visiting the system, the visitor information indicating zones (24a, 24b1, 24b2, 24c) where individual mobile terminals visit;
a plurality of base stations (22a1, 22a2, 22b1, 22b2, 22c) capable of communicating with mobile terminals (21a, 21b1, 21b2);
at least one base station controller (23a, 23b, 23c) for controlling radio links between mobile terminals and the base stations; and
a packet transportation aid (26a, 26b, 26c) for facilitating to transport a packet to its destination, the packet transportation aid, on the basis of the visitor information in the visitor location register, capable of controlling the base station controller and a necessary base station for transporting a packet to a destination mobile terminal (21a, 21b1, 21b2), the packet transportation aid being linked with other communication systems (27a, 27b, 27c), the packet transportation aid (26a, 26b, 26c) issuing an area replacement request to a source system (27a, 27b, 27c) where a source terminal (21a, 21b1, 21b2) exists when a destination terminal (21a, 21b1, 21b2) has traveled from a destination system (27a, 27b, 27c) to the corresponding system (27a, 27b, 27c) during reception of packets, the area replacement request indicating that the destination terminal exists in the corresponding system, the packet transportation aid receiving an untransmitted packet from the source system and controlling the base station controller and a necessary base station for transporting the untransmitted packet to the destination terminal.

15. A system according to claim 14, wherein when the destination terminal (21a, 21b1, 21b2) has traveled from the destination system (27a, 27b, 27c) to the corresponding system (27a, 27b, 27c) during reception of packets, the packet transportation aid obtains untransmitted packets from the destination system from which the destination terminal has left.
